(19) **Europäisches Patentamt**
**European Patent Office**
**Office européen des brevets**

(11) **EP 2 966 784 B1**

(12) **FASCICULE DE BREVET EUROPEEN**

(45) Date de publication et mention
de la délivrance du brevet:
**24.04.2019 Bulletin 2019/17**

(51) Int Cl.:
**H04B 1/717** *(2011.01)*    **H04B 15/04** *(2006.01)*

(21) Numéro de dépôt: **15175745.7**

(22) Date de dépôt: **07.07.2015**

(54) **DISPOSITIF DE COMMUNICATION RADIOFREQUENCE UTILISANT UN SIGNAL TORP**

FUNKKOMMUNIKATIONSVORRICHTUNG, DIE EIN TORP-SIGNAL VERWENDET

RADIOFREQUENCY COMMUNICATION DEVICE USING A TORP SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2014 FR 1456583**

(43) Date de publication de la demande:
**13.01.2016 Bulletin 2016/02**

(73) Titulaire: **Commissariat à l'Énergie Atomique et aux Énergies Alternatives 75015 Paris (FR)**

(72) Inventeurs:
  • **JANY, Clément**
    **38100 GRENOBLE (FR)**
  • **SILIGARIS, Alexandre**
    **38100 GRENOBLE (FR)**

(74) Mandataire: **Brevalex 95, rue d'Amsterdam 75378 Paris Cedex 8 (FR)**

(56) Documents cités:
    **WO-A1-2008/069444    WO-A1-2013/079685**
    **US-A1- 2007 116 104**

  • **NAWREEN KHAN ET AL: "A Low Power Frequency Synthesizer for 60-GHz Wireless Personal Area Networks", IEEE TRANSACTIONS ON CIRCUITS AND SYSTEMS II: EXPRESS BRIEFS, IEEE, US, vol. 58, no. 10, 1 octobre 2011 (2011-10-01), pages 622-626, XP011363375, ISSN: 1549-7747, DOI: 10.1109/TCSII.2011.2164157**

EP 2 966 784 B1

**Description**

**DOMAINE TECHNIQUE ET ART ANTÉRIEUR**

Le domaine de l'invention est celui des systèmes de communication radiofréquence (RF), et plus précisément celui des dispositifs d'émission et/ou de réception de signaux RF.

Un dispositif d'émission de signaux RF transforme un signal en bande de base en un signal RF transmissible dans un canal de propagation, et un dispositif de réception transforme un signal RF reçu en un signal en bande de base. Il existe trois familles d'architectures de dispositifs d'émission et de réception RF permettant de réaliser ces transformations. Le choix de la famille d'architecture dépend notamment du type de signal en bande de base à transmettre (modulation utilisée, bande passante du signal, etc.), de la valeur de la fréquence porteuse du signal RF ainsi que de la nature du canal de propagation utilisé pour la transmission.

La première de ces trois familles correspond aux dispositifs d'émission et de réception à transposition directe. Dans ce type d'architecture, un oscillateur local (généralement une PLL, ou boucle à verrouillage de phase) qui génère un signal périodique à la fréquence porteuse (par exemple un signal sinusoïdal), un mélangeur ainsi qu'un amplificateur sont utilisés. Les systèmes d'émission et de réception sont différenciés. A l'émission, le signal en bande de base est multiplié (dans le domaine temporel) par le signal issu de l'oscillateur local, puis amplifié pour être transmis dans le canal de propagation à la bande RF. A la réception, le signal RF reçu est amplifié, puis il est multiplié par le signal issu de l'oscillateur local afin d'être ramené en bande de base. La complexité du signal en bande de base qu'il est possible de transmettre ainsi que la qualité de la transmission dépendent grandement de la stabilité dans le temps et de la pureté spectrale du signal issu de l'oscillateur local. Le document « A full 4-channel 6.3Gb/s 60GHz direct-conversion transceiver with low-power analog and digital baseband circuitry » de K. Okada et al., Solid-State Circuits Conférence Digest of Technical Papers (ISSCC), 2012 IEEE International, 19-23 février 2012, pages 218-220, décrit un exemple de dispositif d'émission et de réception appartenant à cette première famille d'architectures.

La deuxième de ces trois familles correspond aux dispositifs d'émission et de réception à transposition indirecte. Ces architectures se différencient de celles de la première famille par l'utilisation de plusieurs mélangeurs. Dans ce type d'architecture, un ou plusieurs oscillateurs locaux, indépendants ou non les uns des autres, génèrent différentes fréquences de référence qui sont envoyées en entrée d'autant de mélangeurs qu'il y a de fréquences de références, ces mélangeurs étant disposés en série. La transposition entre la fréquence en bande de base et la fréquence RF est donc réalisée en plusieurs étapes. Un amplificateur est également utilisé. Les systèmes d'émission et de réception sont différenciés : à l'émission, le signal en bande de base est multiplié par la première fréquence de référence, puis le signal obtenu est multiplié par la deuxième fréquence de référence et ainsi de suite pour toutes les fréquences de référence. La somme des fréquences de référence constitue la fréquence porteuse RF à laquelle le signal en bande de base est transposé. Le signal RF obtenu en bout de chaîne est amplifié pour être transmis dans le canal de propagation. A la réception, le signal RF reçu est amplifié, puis il est multiplié par la première fréquence de référence, puis le signal obtenu est multiplié par la deuxième fréquence de référence et ainsi de suite pour toutes les fréquences de référence jusqu'à l'obtention du signal en bande de base. Le document « A 65nm CMOS fully integrated transceiver module for 60GHz wireless HD applications » de A. Siligaris et al., IEEE International Solid-State Circuits Conférence Digest of Technical Papers (ISSCC), 2011, San Fransisco, 20-24 février 2011, pages 162-164, décrit un exemple de dispositif d'émission et de réception appartenant à cette deuxième famille d'architectures.

La troisième famille regroupe les systèmes d'émission et de réception n'ayant pas recours à une multiplication de fréquences pour transposer le signal en bande de base en signal RF (à l'émission) et pour transposer le signal RF en signal en bande de base (à la réception), comme par exemple les systèmes utilisant une modulation OOK (On-Off Keying) dans lesquels, à l'émission, l'information à transmettre est directement modulée à la fréquence RF souhaitée, et à la réception, le signal RF reçu est directement démodulé en bande de base. Le document « A 60GHz UWB impulse radio transmitter with integrated antenna in CMOS 65nm SOI technology » de A. Siligaris et al., IEEE Silicon Monolithic Integrated Circuits in RF Systems (SiRF), 2011, Phoenix, USA, 17-19 janvier 2011, pages 153-156, décrit un exemple de dispositif d'émission et de réception appartenant à cette troisième famille d'architectures.

Dans les systèmes RF modernes, quelle que soit la famille d'architectures, les fréquences porteuses utilisées sont généralement élevées (plusieurs dizaines de GHz), ce qui implique l'utilisation de PLL complexes pour générer la ou les fréquences de référence permettant d'atteindre de telles fréquences porteuses. Par conséquent, la consommation électrique et la taille des circuits pour former ces PLL sont élevées. De plus, la difficulté à générer une fréquence de référence élevée avec une très grande pureté spectrale implique de faire appel à des architectures appartenant à la deuxième famille décrite ci-dessus où plusieurs fréquences de référence plus basses sont utilisées, mais au détriment de la consommation électrique et de la taille des circuits. Enfin, dans les dispositifs d'émission et de réception appartenant à la troisième famille d'architectures, la modulation et la transformation du signal en bande de base vers la bande RF sont dépendantes l'une de l'autre, ce qui limite la complexité des modulations transmissibles et donc le débit pouvant être obtenu avec ce type d'architecture.

Le document WO 2013/079685 A1 décrit un dispositif d'émission et de réception comportant un dispositif de synthèse de fréquence se basant sur une génération, à partir d'une basse fréquence, d'un signal périodique complexe centré à plus haute fréquence, et une récupération de fréquence ultérieure par un oscillateur verrouillé par injection (ILO) afin d'obtenir un signal périodique stabilisé en fréquence servant à la transposition à la fréquence RF du signal en bande de base et à la transposition en bande de base d'un signal RF reçu. Bien que ce type d'architecture évite l'utilisation de PLL complexes pour générer des fréquences de référence servant aux transpositions aux fréquences porteuses souhaitées, l'utilisation d'un circuit oscillateur verrouillé par injection représente une consommation électrique non négligeable (par exemple environ 1 tiers de la puissance totale du circuit d'émission ou de réception), notamment pour réaliser des transmissions à des débits importants de plusieurs Gbits/s.

## EXPOSÉ DE L'INVENTION

Un but de la présente invention est de proposer un nouveau type de dispositif de communication radiofréquence ne présentant pas les inconvénients des dispositifs de l'art antérieur, c'est-à-dire ayant une faible consommation électrique et une taille modérée, même pour des débits importants, et qui ne soit pas limité dans le choix de la modulation pouvant être appliquée aux signaux transmis.

Pour cela, la présente invention propose un dispositif de communication radiofréquence, comportant au moins un circuit de génération d'un signal TORP correspondant à des trains d'oscillations répétés périodiquement à une fréquence $F_{PRP}$ dont les oscillations sont de fréquence $F_{OL} > F_{PRP}$ et dont chaque train d'oscillations a une durée inférieure à $1/F_{PRP}$, et au moins un circuit multiplieur dont une entrée est couplée à une sortie du circuit de génération de signal TORP tel qu'il soit apte à réaliser une multiplication du signal TORP avec un signal en bande de base comprenant des informations destinées à être émises par le dispositif de communication radiofréquence et/ou avec un signal radiofréquence destiné à être reçu par le dispositif de communication radiofréquence.

Le dispositif de communication radiofréquence selon l'invention fait donc appel à un signal de type TORP, ou Trains d'Oscillations Répétés Périodiquement, formant des ensembles d'oscillations répétés périodiquement, pour réaliser la transposition de fréquence des signaux à émettre et/ou des signaux reçus. L'utilisation d'un signal TORP à la place d'un signal sinusoïdal pour réaliser cette transposition fréquentielle permet d'avoir un meilleur rapport signal sur bruit pour l'émission et/ou la réception de signaux. Par rapport au dispositif décrit dans le document WO 2013/079685 A1, le fait de ne pas faire appel à des oscillateurs verrouillés par injection permet de réduire la consommation électrique du dispositif de communication radiofréquence, notamment pour des communications de plusieurs Gbits/s à des fréquences élevées.

Le dispositif selon l'invention peut avantageusement servir à réaliser des communications sans contact au sein de circuits intégrés, par exemple entre un processeur et une mémoire, permettant ainsi de réaliser une transmission de données sans bus physique entre les éléments du circuit intégré, ou entre plusieurs circuits intégrés.

Le dispositif selon l'invention est également avantageusement utilisé pour réaliser des communications de courtes distances avec une puissance suffisamment faible pour ne pas interférer avec d'éventuelles autres communications réalisées autour dans des gammes de fréquences similaires à celle utilisée par le dispositif selon l'invention.

Le dispositif selon l'invention peut correspondre soit à un dispositif d'émission de signaux, soit à un dispositif de réception de signaux, soit à un dispositif d'émission et de réception de signaux.

Ledit au moins un circuit multiplieur peut correspondre à un premier circuit multiplieur apte à réaliser une multiplication du signal TORP avec le signal en bande de base et à un deuxième circuit multiplieur apte à réaliser une multiplication du signal TORP avec le signal radiofréquence. Le premier circuit multiplieur peut servir à réaliser la transposition de la bande de base vers la bande RF lors d'une émission de signaux, et le deuxième circuit multiplieur peut servir à réaliser la transposition de la bande RF vers la bande de base lors d'une réception de signaux.

Un seul circuit de génération de signal TORP peut générer un seul signal TORP pouvant servir à la fois pour l'émission et la réception de signaux. En variante, ledit au moins un circuit de génération d'un signal TORP peut correspondre à un premier circuit de génération de signal TORP dont une sortie est couplée à une entrée du premier circuit multiplieur (servant donc à l'émission de signaux) et à un deuxième circuit de génération de signal TORP dont une sortie est couplée à une entrée du deuxième circuit multiplieur (servant donc à la réception de signaux).

Le dispositif peut comporter en outre au moins deux commutateurs, appelés premier et deuxième commutateurs, aptes à coupler la sortie du ou d'au moins un des circuits de génération de signal TORP avec l'entrée du ou d'au moins un des circuits multiplieurs en les reliant l'une à l'autre soit directement, soit par l'intermédiaire de moyens aptes à générer, à partir du signal TORP, un signal périodique dont le spectre fréquentiel comporte une raie principale correspondant à une des raies du spectre du signal TORP et jouant un rôle de filtre passe-bande appliqué sur le signal TORP et rejetant du spectre fréquentiel dudit signal périodique les raies autres que la raie principale dudit signal périodique. Dans ce cas, le dispositif peut permettre soit un fonctionnement (émission et/ou réception) économe en énergie en ne faisant pas appel auxdits moyens générant le signal périodique, soit un fonctionnement plus consommateur d'énergie qui fait appel auxdits moyens générant le signal périodique mais qui peut être plus approprié dans certains cas, par exemple lors de communications dans des bandes de fréquences étroites.

Les moyens aptes à générer ledit signal périodique peuvent comporter au moins un oscillateur verrouillé par injection, ou ILO, destiné à recevoir en entrée le signal TORP et à être verrouillé au moins périodiquement à la fréquence à laquelle se trouve la raie principale dudit signal périodique.

Le ou au moins l'un des circuits de génération de signal TORP peut comporter au moins :

- un oscillateur apte à générer un signal périodique de fréquence $F_{OL}$, et
- des moyens aptes à être commandés par un signal périodique de fréquence $F_{PRP}$, et reliés à une entrée d'alimentation électrique de l'oscillateur tel qu'ils génèrent une tension d'alimentation de l'oscillateur non nulle seulement pendant une partie de chaque période $1/F_{PRP}$, ou reliés à une sortie de l'oscillateur tel qu'ils coupent une liaison électrique entre la sortie de l'oscillateur et une sortie du circuit de génération du signal TORP seulement pendant une partie de chaque période $1/F_{PRP}$.

Le dispositif peut comporter en outre au moins un commutateur appelé troisième commutateur et apte à délivrer sur une entrée de commande des moyens du circuit de génération de signal TORP ou du premier circuit de génération de signal TORP soit, dans une première configuration, le signal périodique de fréquence $F_{PRP}$, soit, dans une deuxième configuration, le signal en bande de base, et au moins un commutateur appelé quatrième commutateur et apte à délivrer sur une entrée du circuit multiplieur ou du premier circuit multiplieur soit, dans la première configuration, le signal en bande de base, soit, dans la deuxième configuration, un signal d'amplitude constante et correspondant à celle d'un bit de valeur « 1 ». Ainsi, le dispositif peut fonctionner en émission tel que dans la première configuration, le circuit multiplieur ou le premier circuit multiplieur réalise une transposition de fréquence depuis la bande de base vers la bande RF, et tel que dans la deuxième configuration, le circuit multiplieur ou le premier circuit multiplieur réalisant une modulation OOK du signal à émettre.

Le dispositif peut comporter en outre au moins une boucle à verrouillage de phase apte à délivrer le signal périodique de fréquence $F_{PRP}$.

L'invention concerne également un procédé de communication radiofréquence, comportant au moins :

- la génération d'au moins un signal TORP correspondant à des trains d'oscillations répétés périodiquement à une fréquence $F_{PRP}$ dont les oscillations sont de fréquence $F_{OL} > F_{PRP}$ et dont chaque train d'oscillations a une durée inférieure à $1/F_{PRP}$,
- une multiplication du signal TORP avec un signal en bande de base comprenant des informations destinées à être émises et/ou avec un signal radiofréquence reçu.

Le procédé peut comporter la mise en oeuvre d'une première multiplication entre un premier signal TORP et le signal en bande de base, et/ou d'une deuxième multiplication entre un deuxième signal TORP et le signal radiofréquence reçu.

**BRÈVE DESCRIPTION DES DESSINS**

La présente invention sera mieux comprise à la lecture de la description d'exemples de réalisation donnés à titre purement indicatif et nullement limitatif en faisant référence aux dessins annexés sur lesquels :

- la figure 1 représente schématiquement un dispositif de communication radiofréquence, objet de la présente invention, selon un premier mode de réalisation ;
- les figures 2 et 3 représentent des signaux TORP selon deux modes de réalisation différents dans les domaines temporel et fréquentiel utilisés dans un dispositif de communication radiofréquence objet de la présente invention ;
- les figures 4 et 5 représentent des spectres fréquentiels de signaux lors d'une émission de signaux par le dispositif de communication radiofréquence objet de la présente invention ;
- les figures 6 à 8 représentent des spectres fréquentiels de signaux utilisés lors d'une réception de signaux par le dispositif de communication radiofréquence objet de la présente invention ;
- les figures 9 à 11 représentent schématiquement un dispositif de communication radiofréquence, objet de la présente invention, respectivement selon un deuxième, un troisième et un quatrième mode de réalisation ;
- la figure 12 représente schématiquement un exemple de réalisation de moyens de génération d'un signal TORP non cohérent.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

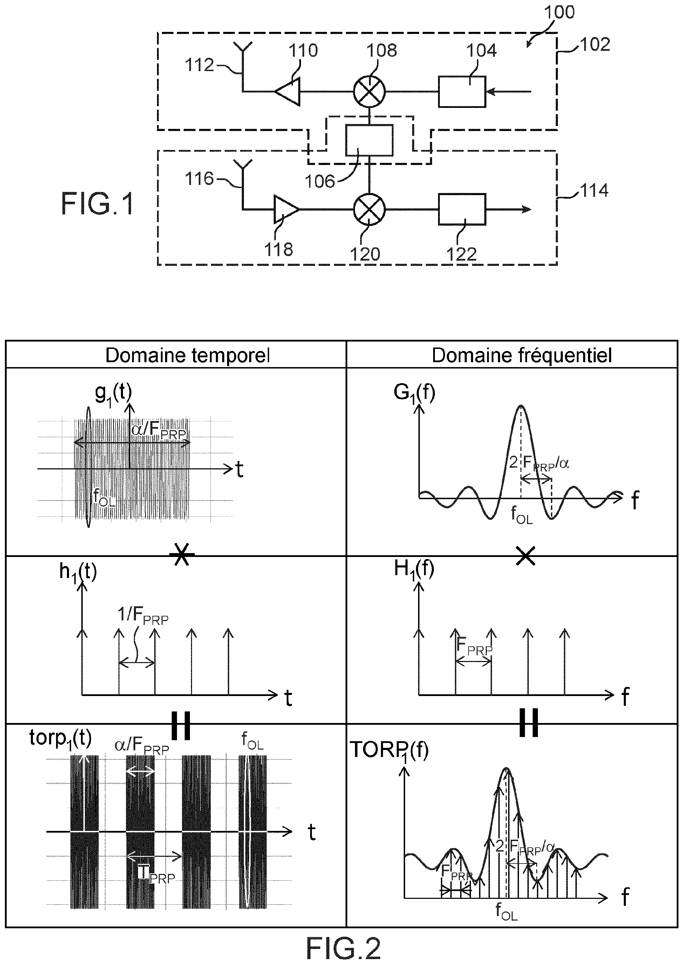

On se réfère tout d'abord à la figure 1 qui représente schématiquement un dispositif 100 de communication radiofréquence selon un premier mode de réalisation.

Le dispositif 100 comporte une partie 102 délimitée symboliquement par des traits pointillés et permettant de réaliser une émission de signaux dans le domaine RF. Cette partie 102 du dispositif 100 comporte un premier circuit 104 de traitement de signal en bande de base recevant en entrée l'information à émettre et délivrant en sortie un signal en bande de base destiné à être émis et appelé signal $BB_{TX}$. La partie 102 comporte également un circuit 106 formant des moyens de génération d'un signal de type TORP, c'est-à-dire un signal formant des Trains d'Oscillations Répétés Périodiquement, ainsi qu'un premier circuit multiplieur 108 apte à réaliser une multiplication du signal $BB_{TX}$ avec le signal TORP dans le domaine temporel, cette multiplication dans le domaine temporel correspondant à un produit de convolution entre les signaux TORP et $BB_{TX}$ dans le domaine fréquentiel, et permettant de transposer le signal $BB_{TX}$ à la fréquence porteuse souhaitée (définie via le signal TORP), délivrant en sortie un signal RF appelé signal $RF_{TX}$. La partie 102 comporte également un amplificateur de puissance 110 et une antenne d'émission 112 pour transmettre le signal $RF_{TX}$ dans un canal de propagation RF.

Le dispositif 100 comporte également une partie 114 délimitée symboliquement par des traits pointillés et permettant de réaliser une réception de signaux RF depuis le canal de propagation RF. Cette partie 114 du dispositif 100 comporte une antenne de réception 116 et un amplificateur faible bruit 118 délivrant un signal $RF_{RX}$ correspondant au signal RF reçu et amplifié. La partie 114 comporte également un deuxième circuit multiplieur 120 réalisant une multiplication dans le domaine temporel du signal $RF_{TX}$ avec le signal TORP délivré par le circuit 106, ce qui correspond à un produit de convolution entre les signaux $RF_{RX}$ et TORP dans le domaine fréquentiel, transposant ainsi le signal $RF_{RX}$ en bande de base en formant un signal appelé $BB_{RX}$. La partie 114 comporte en outre un deuxième circuit 122 de traitement en bande de base recevant en entrée le signal $BB_{RX}$ et délivrant en sortie l'information transmise dans le signal RF reçu.

Dans ce premier mode de réalisation, un même signal TORP est utilisé à la fois pour l'émission et pour la réception. Ainsi, le circuit 106 qui génère le signal TORP fait partie de la partie 102 comportant les éléments réalisant l'émission de signaux et également de la partie 114 comportant les éléments réalisant la réception de signaux.

Contrairement aux dispositifs d'émission et de réception de l'art antérieur dans lesquels un ou plusieurs signaux sinusoïdaux sont générés par un ou plusieurs oscillateurs locaux et multipliés soit par le signal en bande de base à l'émission soit par le signal RF à la réception, le signal utilisé pour la transposition de fréquence du signal en bande de base à l'émission et du signal RF à la réception correspond à un signal de type TORP dont les caractéristiques sont détaillées ci-dessous.

Le signal TORP utilisé pour l'émission et pour la réception de signaux peut être cohérent ou non, en fonction des éléments formant le circuit 106 le générant.

Un signal TORP cohérent est défini dans le domaine temporel comme le résultat d'une convolution entre un premier signal appelé $g_1(t)$ correspondant à un sinus de fréquence $F_{OL}$ fenêtré de largeur $\alpha/F_{PRP}$ (avec $0 < \alpha < 1$) et un deuxième signal $h_1(t)$ correspondant à un peigne de Dirac de période $1/F_{PRP}$ :

$$g_1(t) = sin(2.\pi.F_{OL}.t).\Pi\left(t\frac{F_{PRP}}{\alpha}\right) \tag{1}$$

$$h_1(t) = \sum_{k=-\infty}^{+\infty} \delta\left(t - \frac{k}{F_{PRP}}\right) \tag{2}$$

Le signal résultant de cette convolution est un signal TORP cohérent, appelé $torp_1(t)$, correspondant à des trains, ou ensembles, d'oscillations de fréquence $F_{OL}$ répétés périodiquement à la fréquence $F_{PRP}$, et qui est défini par l'équation suivante :

$$torp_1(t) = g_1(t) * h_1(t) = \left[ sin(2.\pi.F_{OL}.t).\Pi\left( t\frac{F_{PRP}}{\alpha} \right) \right] * \sum_{k=-\infty}^{+\infty} \delta\left( t - \frac{k}{F_{PRP}} \right) \quad (3)$$

La fréquence des oscillations du signal TORP cohérent est égale à $F_{OL}$. Chaque train d'oscillations a une durée égale à $\alpha/F_{PRP}$, ces trains d'oscillations étant répétés toutes les $1/F_{PRP}$, c'est-à-dire sont répétés périodiquement à la fréquence $F_{PRP}$.

Un tel signal TORP est qualifié de cohérent car ses trains d'oscillations possèdent la propriété d'être cohérents en phase, c'est-à-dire que la phase au démarrage de chaque train d'oscillations, tous les $1/F_{PRP}$, est toujours la même.

Dans le domaine fréquentiel, le signal TORP cohérent correspond à la multiplication entre un sinus cardinal centré sur $F_{OL}$ appelé $G_1(f)$ (correspondant au spectre fréquentiel du signal $g_1(t)$) et un peigne de Dirac de période $F_{PRP}$ appelé $H_1(f)$ (correspondant au spectre fréquentiel du signal $hi(t)$) :

$$G_1(f) = \frac{1}{2j}\left[\delta(f - F_{OL}) - \delta(f + F_{OL})\right] * \frac{\alpha}{F_{PRP}}.sin c\left( \pi.f.\frac{\alpha}{F_{PRP}} \right) \quad (4)$$

$$H_1(f) = F_{PRP}.\sum_{k=-\infty}^{+\infty}\delta(f - k.F_{PRP}) \quad (5)$$

Le résultat de cette multiplication, appelé $TORP_1(f)$ et correspondant au spectre fréquentiel du signal $torp_1(t)$, est un spectre discret de raies aux fréquences multiples de $F_{PRP}$ et dont l'enveloppe est un sinus cardinal :

$$\left| TORP_1(f) \right|_{f>0} = G_1(f).H_1(f)$$

$$\left| TORP_1(f) \right|_{f>0} = \left[ \frac{1}{2}\delta(f - F_{OL}) * \frac{\alpha}{F_{PRP}}.sin c\left( \pi.f.\frac{\alpha}{F_{PRP}} \right) \right].F_{PRP}.\sum_{k=0}^{+\infty}\delta(f - k.F_{PRP}) \quad (6)$$

Les différents signaux décrits ci-dessus pour le signal TORP cohérent sont représentés sur la figure 2. On voit notamment sur cette figure que dans le spectre correspondant au signal $TORP_1(f)$, les raies se trouvent aux fréquences multiples de $F_{PRP}$ et les amplitudes de ces raies sont définies par le signal d'enveloppe correspondant à $G_1(f)$. La fréquence $F_{OL}$ est de préférence choisie telle qu'elle soit proche ou égale à une des fréquences multiples de $F_{PRP}$ afin que l'une des raies du signal $TORP_1(f)$ se trouve au niveau de l'amplitude maximale ou proche du maximum de l'enveloppe et donc que cette raie ait cette amplitude maximale. Sur l'exemple représenté sur la figure 2, cette fréquence $F_{OL}$ représentée en pointillés sur le signal $TORP_1(f)$ n'est pas égale à un multiple de $F_{PRP}$ et aucune des raies du signal $TORP_1(f)$ n'a donc une amplitude égale à l'amplitude maximale du signal d'enveloppe.

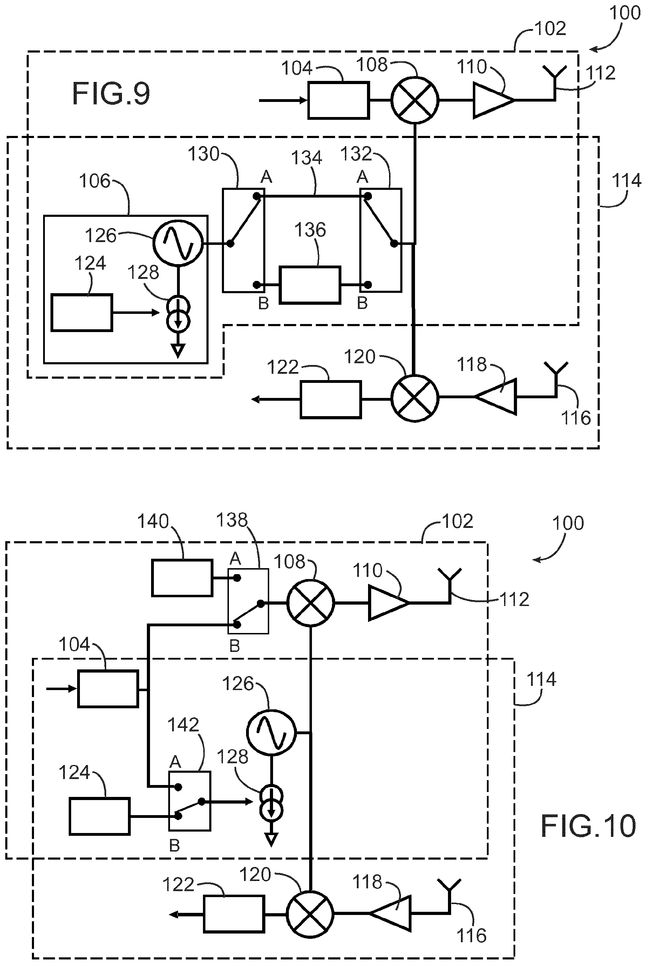

Un tel signal TORP cohérent est par exemple obtenu en faisant appel à un circuit 106 tel que représenté sur la figure 9 (le dispositif 100 représenté sur cette figure 9 sera décrit en détail plus loin). Sur cette figure 9, le circuit 106 comporte une PLL, ou synthèse de fréquence, 124 qui permet de verrouiller et stabiliser la fréquence d'un signal périodique de fréquence $F_{PRP}$, par exemple un signal sinusoïdal fourni par un oscillateur non représenté sur la figure 9 et de fréquence supérieure à environ 1 GHz, et délivrer en sortie ce signal périodique stabilisé en fréquence. En variante, cette PLL, ou synthèse de fréquence, 124 peut être remplacée par n'importe quel dispositif ou structure apte à fournir directement un signal périodique de fréquence $F_{PRP}$ stable en fréquence tel qu'un dispositif résonateur. Le circuit 106 comporte également un oscillateur 126 de type VCO (commandé en tension) apte à délivrer un signal périodique de fréquence $F_{OL}$, par exemple supérieure à environ 10 GHz ou égale à plusieurs dizaines de GHz, et des moyens d'alimentation électrique commandés 128 alimentant électriquement l'oscillateur 126 et qui sont commandés par le signal délivré par la PLL, ou synthèse de fréquence, 124. Ces moyens 128 comportent par exemple à un interrupteur disposé entre une entrée d'alimentation électrique de l'oscillateur 126 et une alimentation électrique, et apte à être commandé par le signal périodique délivré par la PLL, ou synthèse de fréquence, 124, ou, comme sur l'exemple de la figure 9, une source de courant commandée fonctionnant comme un interrupteur interrompant périodiquement, à la fréquence du signal délivré par la PLL, ou synthèse de fréquence, 124, l'alimentation électrique de l'oscillateur 126,. Cette source de courant commandée peut correspondre à un transistor MOS, le signal délivré par la PLL, ou synthèse de fréquence, 124 étant appliqué sur la grille de ce transistor. Une tension de commande est également appliquée en entrée de l'oscillateur 126 afin de commander la valeur de la fréquence du signal délivré par l'oscillateur 126.

Un signal TORP non cohérent est défini dans le domaine temporel comme le résultat d'une multiplication entre un premier signal appelé $g_2(t)$ correspondant à un sinus de fréquence $F_{OL}$ et un deuxième signal $h_2(t)$ correspondant à un signal carré de période $1/F_{PRP}$ et de rapport cyclique $\alpha$ :

$$g_2(t) = sin(2.\pi.F_{OL}.t) \qquad (7)$$

$$h_2(t) = \sum_{k=-\infty}^{+\infty} \delta\left(t - \frac{k}{F_{PRP}}\right) * \Pi\left(t\frac{F_{PRP}}{\alpha}\right) \qquad (8)$$

Le signal résultant de cette multiplication est un signal TORP non cohérent, appelé $torp_2(t)$, correspondant à des trains d'oscillations de fréquence $F_{OL}$ répétés périodiquement à la fréquence $F_{PRP}$ et qui est défini par l'équation suivante :

$$torp_2(t) = g_2(t).h_2(t) = sin(2.\pi.F_{OL}.t).\left[\sum_{k=-\infty}^{+\infty} \delta\left(t - \frac{k}{F_{PRP}}\right) * \Pi\left(t\frac{F_{PRP}}{\alpha}\right)\right] \qquad (9)$$

La fréquence des oscillations du signal TORP non cohérent est égale à $F_{OL}$. Chaque train d'oscillations a une durée égale à $\alpha/F_{PRP}$, ces trains d'oscillations étant répétés toutes les $1/F_{PRP}$, c'est-à-dire sont répétés périodiquement à la fréquence $F_{PRP}$.

Contrairement au précédent signal TORP cohérent, les trains d'oscillations du signal TORP non cohérent ne sont pas nécessairement cohérents en phase, c'est-à-dire que la phase au démarrage de chaque train d'oscillations, c'est-à-dire tous les $1/F_{PRP}$, peut être différente.

Dans le domaine fréquentiel, le signal TORP non cohérent correspond à la convolution entre un Dirac à la fréquence $F_{OL}$, appelé $G_2(f)$ et correspondant au spectre fréquentiel de $g_2(t)$, et un sinus cardinal discrétisé aux fréquences multiples de $F_{PRP}$ appelé $H_2(f)$ et correspondant au spectre fréquentiel de $h_2(t)$ :

$$G_2(f) = \frac{1}{2j}\left[\delta(f - F_{OL}) - \delta(f + F_{OL})\right] \qquad (10)$$

$$H_2(f) = F_{PRP}.\sum_{k=-\infty}^{+\infty} \delta(f - k.F_{PRP}).\frac{\alpha}{F_{PRP}}.sin\,c\left(\pi.f.\frac{\alpha}{F_{PRP}}\right) \qquad (11)$$

Le résultat de cette convolution, appelé $TORP_2(f)$ et correspondant au spectre fréquentiel du signal $torp_2(t)$, est une translation du sinus cardinal discrétisé $H_2(f)$ autour de la fréquence $F_{OL}$ :

$$\left|TORP_2(f)\right|_{f>0} = G_2(f) * H_2(f) = H_2(f - F_{OL})$$

$$\left|TORP_2(f)\right|_{f>0} = F_{PRP}.\sum_{k=0}^{+\infty} \delta(f - F_{OL} - k.F_{PRP}).\frac{\alpha}{F_{PRP}}.sin\,c\left(\pi.(f - F_{OL}).\frac{\alpha}{F_{PRP}}\right) \qquad (12)$$

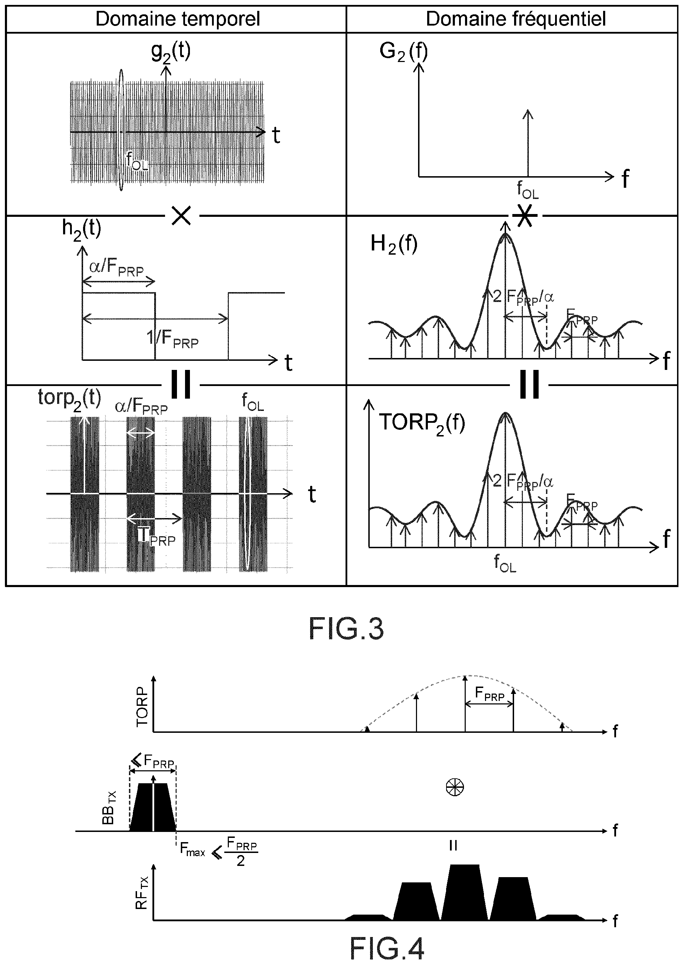

Les différents signaux décrits ci-dessus pour le signal TORP non cohérent sont représentés sur la figure 3. On voit notamment sur cette figure que dans le signal $TORP_2(f)$, la raie centrale du sinus cardinal discrétisé se trouve toujours à la fréquence $F_{OL}$.

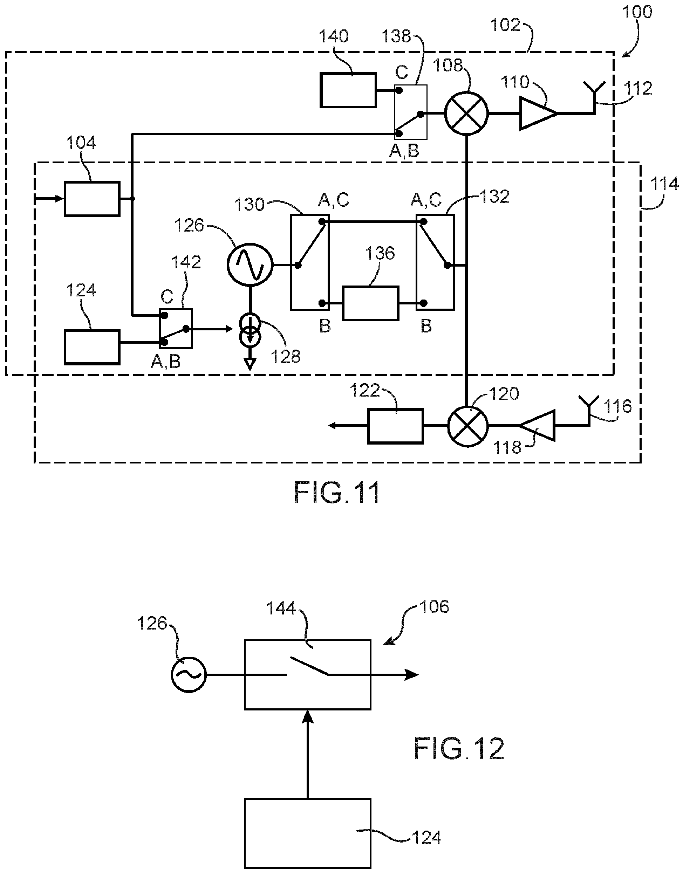

Un tel signal TORP non cohérent est par exemple obtenu à partir d'un circuit 106 tel que représenté sur la figure 12. Dans ce circuit 106, l'oscillateur 126 est alimenté en continu et fournit un signal sinusoïdal de fréquence $F_{OL}$. Ce signal sinusoïdal est envoyé en entrée d'un interrupteur 144 commandé par le signal périodique de fréquence $F_{PRP}$

délivré par la PLL, ou synthèse de fréquence, 124. L'interrupteur 144 est périodiquement (période $1/F_{PRP}$) en position fermée pendant une durée correspondant à une partie de la période $1/F_{PRP}$ et égale à $\alpha/F_{PRP}$, et au cours de laquelle un train d'oscillations est délivré en sortie.

Dans la partie émission 102 du dispositif 100, le signal $BB_{TX}$ en bande de base est multiplié (dans le domaine temporel) avec le signal TORP par le premier circuit multiplieur 108 (figure 1). Le spectre du signal $RF_{TX}$ correspondant au résultat de cette multiplication (qui correspond à une convolution dans le domaine fréquentiel) est différent selon la largeur du spectre du signal $BB_{TX}$ par rapport à la fréquence $F_{PRP}$ correspondant à la fréquence de répétition des raies du signal TORP.

La figure 4 représente le cas où la largeur du spectre du signal $BB_{TX}$ est inférieure ou égale à la fréquence $F_{PRP}$, c'est-à-dire le cas où la fréquence maximale $F_{max}$ du signal $BB_{TX}$ est telle que $F_{max} \leq F_{PRP}/2$. Dans ce cas, on voit que le spectre du signal du $RF_{TX}$ obtenu est formé de plusieurs bandes spectrales centrées autour des fréquences des raies du signal TORP qui sont espacées les unes des autres de $F_{PRP}$. Du fait que la largeur de chacune de ces bandes spectrales est égale à la largeur du spectre du signal $BB_{TX}$ qui est inférieure ou égale à $F_{PRP}$, il n'y a donc pas de recouvrement entre les différentes bandes spectrales du signal $RF_{TX}$.

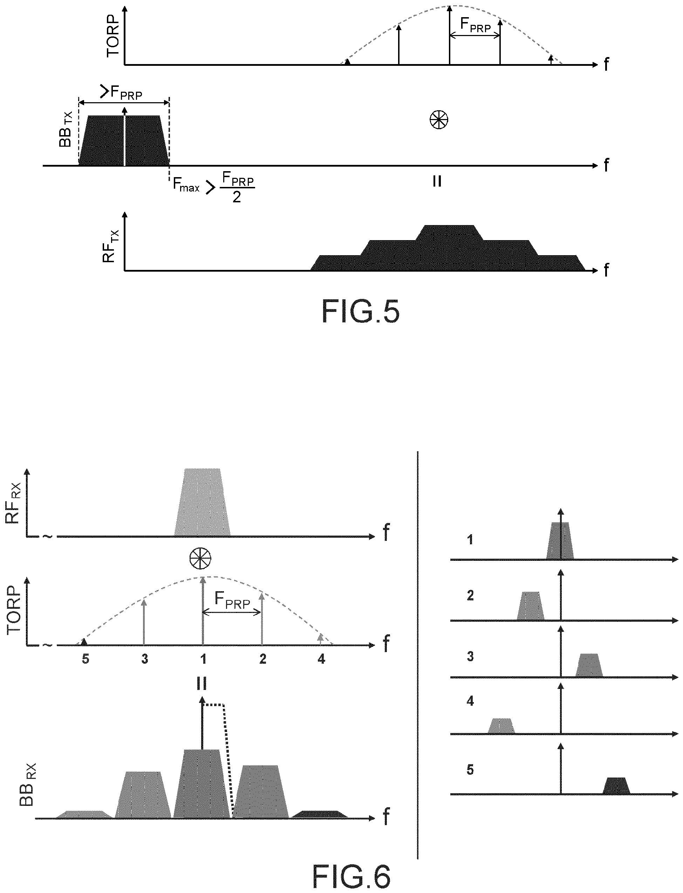

La figure 5 représente le cas où la largeur du spectre du signal $BB_{TX}$ est supérieure à la fréquence $F_{PRP}$, c'est-à-dire le cas où la fréquence maximale $F_{max}$ du signal $BB_{TX}$ est telle que $F_{max} > F_{PRP}/2$. Dans ce cas, on voit que le spectre du signal du $RF_{TX}$ obtenu est formé de plusieurs bandes spectrales centrées autour des fréquences des raies du signal TORP qui sont espacées les unes des autres de $F_{PRP}$. Du fait que la largeur de chacune de ces bandes spectrales est égale à la largeur du spectre du signal $BB_{TX}$ qui est supérieure à $F_{PRP}$, il y a donc un recouvrement entre les bandes spectrales voisines du signal $RF_{TX}$.

De manière analogue, le spectre du signal $BB_{RX}$ correspondant au résultat de la multiplication dans le domaine temporel entre le signal TORP et le signal $RF_{RX}$ est différent selon la largeur du spectre fréquentiel du signal $RF_{RX}$ par rapport à la fréquence $F_{PRP}$ ainsi que selon la forme du spectre du signal $RF_{RX}$. Le produit de convolution étant distributif sur l'addition, cette convolution dans le domaine fréquentiel peut être considérée comme étant réalisée séparément pour chaque raie du spectre du signal TORP avec le signal $RF_{RX}$, le spectre fréquentiel du signal obtenu correspondant à la somme de ces convolutions. Le spectre du signal résultant $BB_{RX}$ correspond donc à la somme des produits de convolution entre chacune des raies du signal TORP et le spectre du signal $RF_{RX}$.

La figure 6 représente le cas d'un signal $RF_{RX}$ dont le spectre fréquentiel occupe une seule bande spectrale de largeur inférieure ou égale à la fréquence $F_{PRP}$, pour un signal $RF_{RX}$ correspondant à un signal émis sans l'utilisation d'un signal TORP (du fait que ce signal $RF_{RX}$ ne comporte qu'une seule bande spectrale, contrairement aux signaux $RF_{TX}$ précédemment décrits en liaison avec les figures 4 et 5). Dans ce cas, en faisant appel à un signal TORP dont le spectre comporte une raie (de préférence la raie centrale présentant la plus grande amplitude) se trouvant à la fréquence centrale du signal $RF_{RX}$, on retrouve, dans le signal $BB_{RX}$, le contenu du signal reçu $RF_{RX}$ autour de tous les multiples de $F_{PRP}$ définis par les raies du signal TORP. Le spectre du signal $BB_{RX}$ obtenu est donc formé de plusieurs bandes spectrales qui sont espacées les unes des autres de $F_{PRP}$ et qui comportent chacune le contenu du signal $RF_{RX}$. Le spectre du signal $BB_{RX}$ correspond à la somme des contributions des produits de convolution de chaque raie du signal TORP avec le signal $RF_{RX}$, et cela du fait de la distributivité du produit de convolution par rapport à l'addition. Chacune de ces contributions forme une des bandes spectrales du signal $BB_{RX}$. La partie droite de la figure 6 représente individuellement chacune de ces bandes spectrales, les numéros indiqués à côté de ces bandes correspondants aux numéros des raies du spectre du signal TORP représenté sur la partie gauche de la figure 6. Du fait que la largeur de chacune de ces bandes spectrales est égale à la largeur du spectre du signal $RF_{RX}$ qui est inférieure ou égale à $F_{PRP}$, il n'y a donc pas de recouvrement entre les différentes bandes spectrales du signal $BB_{RX}$. Un filtrage, par exemple mis en oeuvre par le deuxième circuit 122 de traitement en bande de base et représenté symboliquement en pointillés sur le signal $BB_{RX}$ de la figure 6, permet de ne récupérer que la bande spectrale située autour de la fréquence nulle (et qui correspond à la bande spectrale de plus grande amplitude lorsque la raie central de plus grande amplitude du signal TORP se trouve à une fréquence égale à la fréquence centrale du signal $RF_{RX}$) qui suffit pour retrouver l'information transmise.

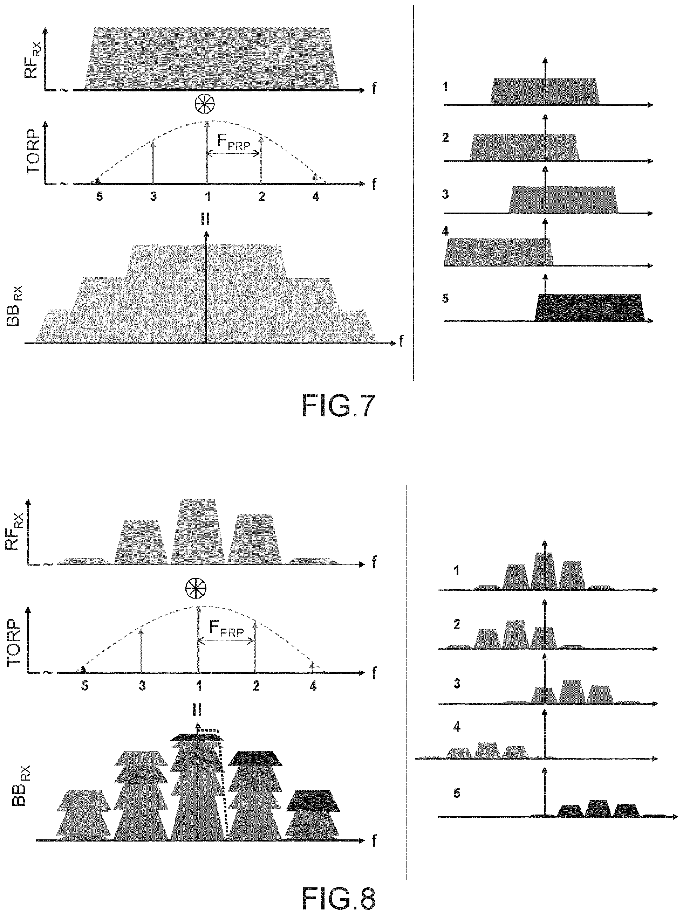

La figure 7 représente le cas d'un signal $RF_{RX}$ dont le spectre fréquentiel occupe une seule bande spectrale de largeur supérieure à la fréquence $F_{PRP}$, pour un signal $RF_{RX}$ correspondant à un signal émis sans l'utilisation d'un signal TORP. Dans l'exemple de la figure 7, le spectre du signal $RF_{RX}$ occupe une bande spectrale de largeur égale à plusieurs fois $F_{PRP}$, et recouvre donc plusieurs raies du spectre du signal TORP. Dans ce cas, la somme des produits de convolution des différentes raies du spectre du signal TORP avec ce signal $RF_{RX}$ (représentés individuellement sur la partie droite de la figure 7) donne un résultat complexe avec des repliements autour de la fréquence nulle autour de laquelle est centré le spectre du signal $BB_{RX}$. Un traitement du signal plus complexe qu'un simple filtrage est dans ce cas nécessaire pour retrouver dans le signal $BB_{RX}$ l'information initiale transmise dans le signal $RF_{RX}$.

La figure 8 représente le cas d'un signal $RF_{RX}$ dont le spectre fréquentiel occupe plusieurs bandes spectrales chacune de largeur inférieure ou égale à la fréquence $F_{PRP}$, le signal $RF_{RX}$ correspondant à un signal émis en utilisant un signal TORP. Ce signal $RF_{RX}$ correspond par exemple au signal $RF_{TX}$ précédemment décrit en liaison avec la figure 4. Dans ce cas, la convolution du spectre du signal $RF_{RX}$ avec chacune des raies du spectre du signal TORP contribue à translater le spectre reçu vers la fréquence nulle et les contributions de chaque convolution s'additionnent (cette addition est représentée symboliquement sur la figure 8 par l'empilement de bandes spectrales sur le spectre du signal $BB_{RX}$). Cette addition permet d'obtenir des bandes spectrales, et notamment celle centrée autour de la fréquence nulle, de plus grande amplitude que dans le cas précédemment décrit en liaison avec la figure 6. Un meilleur rapport signal sur bruit est également obtenu étant donné que le bruit des contributions additionnées sur une même bande spectrale ne s'additionne pas mais se moyenne. Un filtrage, par exemple mis en oeuvre par le deuxième circuit 122 de traitement en bande de base et représenté symboliquement en pointillés sur le signal $BB_{RX}$ de la figure 8, permet de ne récupérer que la bande spectrale située autour de la fréquence nulle qui est suffisante pour retrouver l'information initiale transmise.

Il est également possible de réaliser une réception d'un signal $RF_{RX}$ dont le spectre fréquentiel comporte plusieurs bandes spectrales se recouvrant, comme le signal $RF_{TX}$ précédemment décrit en liaison avec la figure 5. On obtient dans ce cas un signal $BB_{RX}$ dont le spectre est plus complexe que celui précédemment décrit en liaison avec la figure 8. Un traitement du signal plus complexe qu'un simple filtrage est dans ce cas nécessaire pour retrouver dans le signal $BB_{RX}$ l'information initiale transmise dans le signal $RF_{RX}$.

Le circuit 106 du dispositif 100 peut correspondre au circuit 106 précédemment décrit en liaison avec la figure 9 et permettant de générer un signal TORP cohérent, ou peut correspondre au circuit 106 précédemment décrit en liaison avec la figure 12 et permettant de générer un signal TORP non cohérent.

Dans une variante du premier mode de réalisation décrit ci-dessus, le circuit 106 fournissant le signal TORP peut n'être relié qu'à la partie émission 102 ou qu'à la partie réception 114 du dispositif 100. Le signal TORP est dans ce cas utilisé uniquement avec la partie 102 ou avec la partie 114 du dispositif 100. L'autre partie qui ne fait pas appel au signal TORP pour réaliser la transposition en fréquence du signal en bande de base $BB_{TX}$ ou du signal $RF_{RX}$ peut utiliser un signal périodique, tel qu'un signal sinusoïdal, pour la multiplication réalisant cette transposition en fréquence. Selon une autre variante, le dispositif 100 peut correspondre à un dispositif d'émission de signaux ne comportant que la partie 102, ou correspondre à un dispositif de réception de signaux ne comportant que la partie 104.

Selon une autre variante de réalisation, le dispositif 100 peut comporter deux circuits 106 différents chacun couplés à l'une des parties 102 et 114. Ainsi, des signaux TORP différents peuvent être utilisés pour réaliser l'émission de signaux et la réception de signaux.

La figure 9 représente d'un dispositif 100 de communication radiofréquence selon un deuxième mode de réalisation.

Comme dans le premier mode de réalisation, la partie émission 102 du dispositif 100 comporte le premier circuit 104 de traitement en bande de base, le circuit 106 générant le signal TORP, le premier circuit multiplieur 108, l'amplificateur de puissance 110 et l'antenne d'émission 112. En variante, le circuit 106 représenté sur la figure 9 pourrait être remplacé par celui précédemment décrit en liaison avec la figure 12 générant un signal TORP non cohérent.

La partie émission 102 du dispositif 100 comporte également un premier commutateur 130 comportant une entrée et deux sorties (l'une portant la référence A et l'autre portant la référence B sur la figure 9), ainsi qu'un deuxième commutateur 132 comportant deux entrées (l'une portant la référence A et l'autre portant la référence B) et une sortie. Les deux commutateurs 130 et 132 sont commandés par un même signal de commande permettant d'obtenir deux configurations.

Dans une première configuration (qui correspond au cas représenté sur la figure 9), l'entrée du premier commutateur 130 est reliée à la première sortie référencée A du premier commutateur 130, et la première entrée référencée A du deuxième commutateur 132 est reliée à la sortie du deuxième commutateur 132. Du fait que la sortie du circuit 106 est reliée à l'entrée du premier commutateur 130, que la sortie du deuxième commutateur 132 est reliée à l'entrée du premier circuit multiplieur 108 et que la première sortie A du premier commutateur 130 est reliée directement à la première entrée A du deuxième commutateur 132 par une simple liaison électrique 134 formée par exemple par un fil ou piste conductrice, le signal TORP délivré par le circuit 106 se retrouve appliqué, dans cette première configuration, à l'entrée du circuit multiplieur 108. Dans cette première configuration, le fonctionnement de la partie émission 102 du dispositif 100 selon le deuxième mode de réalisation est similaire à celui précédemment décrit pour le dispositif 100 selon le premier mode de réalisation.

Dans une deuxième configuration, l'entrée du premier commutateur 130 est reliée à la deuxième sortie référencée B du premier commutateur 130, et la deuxième entrée référencée B du deuxième commutateur 132 est reliée à la sortie du deuxième commutateur 132. La deuxième sortie du premier commutateur 130 est reliée à l'entrée d'un circuit oscillateur verrouillé par injection, ou ILO, 136 qui permet de générer, à partir du signal TORP, un signal périodique dont le spectre fréquentiel comporte une raie principale correspondant à une des raies du spectre du signal TORP et joue un rôle de filtre passe-bande appliqué sur le signal TORP qui rejette du spectre fréquentiel dudit signal périodique les raies autres que la raie principale dudit signal périodique.

Ainsi, dans cette deuxième configuration, l'ILO 136 permet de récupérer une des fréquences du signal TORP et donc de délivrer à l'entrée du premier circuit multiplieur 108 un signal périodique, par exemple sinusoïdal, dont le spectre présente une raie principale dont l'amplitude a une valeur très supérieure à celles d'éventuelles raies adjacentes (la présence de ces raies adjacente étant due au fait que la réjection de ces raies adjacentes par l'ILO 136 n'est pas parfaite). Dans cette deuxième configuration, la partie émission 102 du dispositif 100 présente un fonctionnement similaire au dispositif décrit dans le document WO 2013/079685 A1. Par rapport à la première configuration, le spectre du signal périodique appliqué à l'entrée du premier circuit multiplieur 108 dans cette deuxième configuration ne comporte donc qu'une seule raie (en considérant que les raies adjacentes éventuellement présentes ont une amplitude négligeable par rapport à celle de la raie principale), ce qui permet d'éviter un étalement du spectre du signal $RF_{TX}$ émis.

Dans ce deuxième mode de réalisation, l'utilisateur peut donc choisir entre la première configuration dans laquelle la consommation du dispositif 100 est réduite du fait que l'ILO 136 n'est pas utilisé, et la deuxième configuration qui, en contrepartie d'une consommation plus importante, émet un signal RF dont le spectre occupe une largeur réduite, ce qui peut être utile par exemple lorsque le canal de transmission réservé à l'émission du signal $RF_{TX}$ est étroit ou pour éviter de polluer des canaux adjacents.

La partie réception 114 du dispositif 100 comporte, comme dans le premier mode de réalisation, l'antenne de réception 116, l'amplificateur faible bruit 118, le deuxième circuit multiplieur 120 et le deuxième circuit 122 de traitement en bande de base. Comme pour le premier circuit multiplieur 108 de la partie émission 104, le deuxième circuit multiplieur 120 reçoit en entrée soit directement le signal TORP lorsque les commutateurs 130 et 132 sont dans la première configuration, soit le signal délivré par l'ILO 136. Dans cette configuration, on peut replier uniquement une bande spectrale du signal $RF_{RX}$ et non toutes les bandes.

Les variantes du premier mode de réalisation précédemment décrites (utilisation du signal TORP uniquement en émission ou en réception, dispositif 100 correspondant uniquement à un dispositif d'émission ou de réception, un ou deux circuits 106 générant des signaux TORP cohérents ou non) peuvent également s'appliquer pour ce deuxième mode de réalisation.

Selon une autre variante de ce deuxième mode de réalisation, il est possible que la sortie du deuxième commutateur 132 ne soit reliée à l'entrée que de l'un des deux circuits multiplieurs 108, 120, et que l'entrée de l'autre circuit multiplieur 108, 120 soit reliée directement à la sortie du circuit 106 ou à la sortie de l'ILO 136. Ainsi, le choix entre la première et la deuxième configuration des commutateurs 130 et 132 ne concerne que la partie émission 102 ou la partie réception 114, l'autre partie n'étant pas affectée par ce changement de configuration.

Dans une autre variante, le dispositif 100 peut comporter deux autres commutateurs reliés au circuit 106, à la liaison électrique 134 et à l'ILO 136 de manière similaire aux commutateurs 130 et 132, mais qui sont commandés pour être dans la première ou la deuxième configuration indépendamment de la configuration dans laquelle se trouvent les commutateurs 130 et 132. La sortie du deuxième commutateur 132 peut dans ce cas n'être reliée qu'à l'entrée du premier circuit multiplieur 108 (et non à celle du deuxième circuit multiplieur 120), et la sortie du deuxième des deux autres commutateurs n'est reliée qu'à l'entrée du deuxième circuit multiplieur 120 (et non à celle du premier circuit multiplieur 108). Avec cette variante, la partie émission 102 et la partie réception 114 peuvent chacune fonctionner dans la première ou la deuxième configuration indépendamment l'une de l'autre.

La figure 10 représente un dispositif 100 d'émission et de réception de signaux selon un troisième mode de réalisation.

Comme dans le premier mode de réalisation, la partie émission 102 du dispositif 100 comporte le premier circuit 104 de traitement en bande de base, le circuit 106 générant le signal TORP (formé par la PLL, ou synthèse de fréquence 124, l'oscillateur 126 et les moyens d'alimentation électrique commandés 128 comme sur la figure 9), le premier circuit multiplieur 108, l'amplificateur de puissance 110 et l'antenne d'émission 112.

La partie émission 102 du dispositif 100 comporte également un premier commutateur 138 comportant une première entrée A reliée à la sortie d'un circuit 140 délivrant sur cette sortie un signal d'amplitude constante et correspondant à celle d'un bit de valeur « 1 », une deuxième entrée B reliée à la sortie du circuit 104 sur laquelle est délivré le signal $BB_{TX}$, et une sortie reliée à une entrée du premier circuit multiplieur 108. La partie émission 102 comporte également un deuxième commutateur 142 comportant une première entrée A reliée à la sortie du circuit 104, une deuxième entrée B reliée à la sortie de la PLL 124, et une sortie reliée à l'entrée de commande des moyens d'alimentation électrique commandés 128.

Dans une première configuration (qui correspond au cas représenté sur la figure 10), chaque commutateur 138, 142 délivre sur sa sortie le signal appliqué sur son entrée B. Dans ce cas, les moyens d'alimentation électrique 128 sont commandés par le signal délivré par la PLL 124 et le premier multiplieur 108 reçoit en entrée le signal TORP et le signal $BB_{TX}$. Dans cette première configuration, le fonctionnement de la partie émission 102 du dispositif 100 selon le troisième mode de réalisation est similaire à celui précédemment décrit pour le dispositif 100 selon le premier mode de réalisation.

Dans une deuxième configuration, chaque commutateur 138, 142 délivre sur sa sortie le signal appliqué sur son entrée A. Dans ce cas, les moyens d'alimentation électrique 128 sont commandés par le signal $BB_{TX}$, et le premier multiplieur 108 reçoit en entrée le signal délivré par l'oscillateur 126 (qui dans ce cas n'est pas de type TORP étant donné la commande des moyens 128 par le signal $BB_{TX}$) et le signal de valeur « 1 » délivré par le circuit 140. Dans cette deuxième configuration, la partie émission 102 réalise donc directement une modulation OOK (« On Off Keying »)

EP 2 966 784 B1

du signal BB<sub>TX</sub>, puis une émission de ce signal modulé.

Dans ce troisième mode de réalisation, l'utilisateur peut donc choisir entre deux modes d'émission du signal BB<sub>TX</sub> : soit en modulation OOK, soit transposé en fréquence RF. En modulation OOK, les données à transmettre commandent directement le générateur de signal TORP et le signal est directement généré dans la bande RF.

La partie réception 114 du dispositif 100 comporte, comme dans le premier mode de réalisation, l'antenne de réception 116, l'amplificateur faible bruit 118, le deuxième circuit multiplieur 120 et le deuxième circuit de traitement en bande de base 122. La partie réception 114 est dans ce cas utilisée lorsque les commutateurs sont dans la première configuration, c'est-à-dire lorsque l'oscillateur 126 délivre le signal TORP.

Les variantes du premier et du deuxième modes de réalisation précédemment décrites peuvent également s'appliquer pour le troisième mode de réalisation.

Selon une autre variante de ce troisième mode de réalisation, la partie réception 114 peut comporter un autre circuit générant un signal TORP, distinct de celui servant à l'émission, afin que lorsque la partie émission 102 réalise une modulation OOK et donc que l'oscillateur 126 ne délivre pas un signal TORP, la partie réception 114 puisse tout de même réaliser une réception de signaux en utilisant un signal TORP.

Selon une autre variante de réalisation de la partie émission 102 du dispositif 100 selon ce deuxième mode de réalisation, le circuit 140 peut être remplacé par un générateur de symboles apte à émettre les bits de l'information à transmettre de manière synchronisée avec le signal délivré par la PLL 124. La sortie de ce générateur de symboles est reliée à la première entrée A du premier commutateur 138 par l'intermédiaire d'une ligne à retards, ou DLL, permettant de synchroniser, au niveau du premier circuit multiplieur 108, le signal TORP délivré par l'oscillateur 126 et le signal délivré par le générateur de symboles. En outre, dans cette variante, le dispositif 100 ne comporte pas le deuxième commutateur 142 du fait que le signal délivré par la PLL 124 est toujours appliqué sur l'entrée de commande des moyens d'alimentation 128. Cette autre variante peut être mise en oeuvre lorsque, dans la deuxième configuration réalisant une modulation OOK du signal à émettre, il est nécessaire de synchroniser le signal TORP avec le signal comportant l'information à envoyer.

La figure 11 représente un dispositif 100 d'émission et de réception de signaux selon un quatrième mode de réalisation.

Le dispositif 100 selon le quatrième mode de réalisation comporte à la fois les éléments précédemment décrits en liaison avec le deuxième mode de réalisation, ainsi que ceux précédemment décrits en liaison avec le troisième mode de réalisation. Ainsi, dans une première configuration dans laquelle les commutateurs 130, 132, 138 et 142 sont chacun commutés dans un état dans lequel leur entrée ou sortie référencée A sur la figure 11 est reliée aux autres éléments du dispositif 100, le fonctionnement du dispositif 100 selon le quatrième mode de réalisation est similaire à celui précédemment décrit pour le dispositif 100 selon le deuxième mode de réalisation se trouvant dans la première configuration (signal TORP appliqué directement en entrée des circuit multiplieurs 108 et 120 pour réaliser une émission et une réception de signaux). Dans une deuxième configuration dans laquelle les commutateurs 130, 132, 138 et 142 sont chacun commutés dans un état dans lequel leur entrée ou sortie référencée B sur la figure 11 est reliée aux autres éléments du dispositif 100, le fonctionnement du dispositif 100 selon le quatrième mode de réalisation est similaire à celui précédemment décrit pour le dispositif 100 selon le deuxième mode de réalisation se trouvant dans la deuxième configuration (signal TORP appliqué en entrée de l'ILO 136, le signal délivré par l'ILO 136 étant appliqué en entrée des circuits multiplieurs 108 et 120 pour réaliser une émission et une réception de signaux). Dans une troisième configuration dans laquelle les commutateurs 130, 132, 138 et 142 sont chacun commutés dans un état dans lequel leur entrée ou sortie référencée C sur la figure 11 est reliée aux autres éléments du dispositif 100, le fonctionnement du dispositif 100 selon le quatrième mode de réalisation est similaire à celui précédemment décrit pour le dispositif 100 selon le troisième mode de réalisation se trouvant dans la deuxième configuration (modulation OOK du signal à émettre).

Les différentes variantes de réalisation précédemment décrites pour les précédents modes de réalisation s'appliquent de manière analogue au dispositif 100 selon le quatrième mode de réalisation.

Le dispositif 100 selon les différents modes de réalisation précédemment décrits peuvent être réalisés en technologie CMOS 65 nm pour réaliser des transmissions à des gammes de fréquences comprises entre environ 57 GHz et 66 GHz.

## Revendications

**1.** Dispositif (100) de communication radiofréquence, comportant au moins un circuit (106) de génération d'un signal TORP correspondant à des trains d'oscillations répétés périodiquement à une fréquence $F_{PRP}$ dont les oscillations sont de fréquence $F_{OL} > F_{PRP}$ et dont chaque train d'oscillations a une durée inférieure à $1/F_{PRP}$, et au moins un circuit multiplieur (108, 120) dont une entrée est couplée à une sortie du circuit (106) de génération de signal TORP tel qu'il soit apte à réaliser une multiplication du signal TORP avec un signal en bande de base comprenant des informations destinées à être émises par le dispositif (100) de communication radiofréquence et/ou avec un signal radiofréquence destiné à être reçu par le dispositif (100) de communication radiofréquence.

2. Dispositif (100) selon la revendication 1, dans lequel ledit au moins un circuit multiplieur correspond à un premier circuit multiplieur (108) apte à réaliser une multiplication du signal TORP avec le signal en bande de base et à un deuxième circuit multiplieur (120) apte à réaliser une multiplication du signal TORP avec le signal radiofréquence.

3. Dispositif (100) selon la revendication 2, dans lequel ledit au moins un circuit (106) de génération d'un signal TORP correspond à un premier circuit de génération de signal TORP dont une sortie est couplée à une entrée du premier circuit multiplieur (108) et à un deuxième circuit de génération de signal TORP dont une sortie est couplée à une entrée du deuxième circuit multiplieur (120).

4. Dispositif (100) selon l'une des revendications précédentes, comportant en outre au moins deux commutateurs (130, 132), appelés premier et deuxième commutateurs, aptes à coupler la sortie du ou d'au moins un des circuits (106) de génération de signal TORP avec l'entrée du ou d'au moins un des circuits multiplieurs (108, 120) en les reliant l'une à l'autre soit directement, soit par l'intermédiaire de moyens (136) aptes à générer, à partir du signal TORP, un signal périodique dont le spectre fréquentiel comporte une raie principale correspondant à une des raies du spectre du signal TORP et jouant un rôle de filtre passe-bande appliqué sur le signal TORP et rejetant du spectre fréquentiel dudit signal périodique les raies autres que la raie principale dudit signal périodique.

5. Dispositif (100) selon la revendication 4, dans lequel les moyens aptes à générer ledit signal périodique comportent au moins un oscillateur verrouillé par injection (136) destiné à recevoir en entrée le signal TORP et à être verrouillé au moins périodiquement à la fréquence à laquelle se trouve la raie principale dudit signal périodique.

6. Dispositif (100) selon l'une des revendications précédentes, dans lequel le ou au moins l'un des circuits (106) de génération de signal TORP comporte au moins :

   - un oscillateur (126) apte à générer un signal périodique de fréquence $F_{OL}$, et
   - des moyens (128, 144) aptes à être commandés par un signal périodique de fréquence $F_{PRP}$, et reliés à une entrée d'alimentation électrique de l'oscillateur (126) tel qu'ils génèrent une tension d'alimentation de l'oscillateur (126) non nulle seulement pendant une partie de chaque période $1/F_{PRP}$, ou reliés à une sortie de l'oscillateur (126) tel qu'ils coupent une liaison électrique entre la sortie de l'oscillateur (126) et une sortie du circuit (106) de génération du signal TORP seulement pendant une partie de chaque période $1/F_{PRP}$.

7. Dispositif (100) selon la revendication 6, comportant en outre au moins un commutateur (142) appelé troisième commutateur et apte à délivrer sur une entrée de commande des moyens (128, 144) du circuit (106) de génération de signal TORP ou du premier circuit (106) de génération de signal TORP soit, dans une première configuration, le signal périodique de fréquence $F_{PRP}$, soit, dans une deuxième configuration, le signal en bande de base, et au moins un commutateur (138) appelé quatrième commutateur et apte à délivrer sur une entrée du circuit multiplieur (108) ou du premier circuit multiplieur (108) soit, dans la première configuration, le signal en bande de base, soit, dans la deuxième configuration, un signal d'amplitude constante et correspondant à celle d'un bit de valeur « 1 ».

8. Dispositif (100) selon l'une des revendications 6 ou 7, comportant en outre au moins une boucle à verrouillage de phase (124) apte à délivrer le signal périodique de fréquence $F_{PRP}$.

9. Procédé de communication radiofréquence, comportant au moins :

   - la génération d'au moins un signal TORP correspondant à des trains d'oscillations répétés périodiquement à une fréquence $F_{PRP}$ dont les oscillations sont de fréquence $F_{OL} > F_{PRP}$ et dont chaque train d'oscillations a une durée inférieure à $1/F_{PRP}$,
   - une multiplication du signal TORP avec un signal en bande de base comprenant des informations destinées à être émises et/ou avec un signal radiofréquence reçu.

10. Procédé selon la revendication 9, comportant la mise en oeuvre d'une première multiplication entre un premier signal TORP et le signal en bande de base, et/ou d'une deuxième multiplication entre un deuxième signal TORP et le signal radiofréquence reçu.

**Patentansprüche**

1. Vorrichtung (100) zur Funkfrequenzkommunikation, umfassend wenigstens eine Schaltung (106) zur Erzeugung eines TORP-Signals entsprechend Oszillationszügen, die periodisch mit einer Frequenz $F_{PRP}$ wiederholt sind, deren Oszillationen eine Frequenz $F_{OL} > F_{PRP}$ haben, und wovon jeder Oszillationszug eine Dauer von weniger als $1/F_{PRP}$ hat, sowie wenigstens eine Multiplikatorschaltung (108, 120), von der ein Eingang mit einem Ausgang der Schaltung (106) zur Erzeugung des TORP-Signals derart gekoppelt ist, dass sie in der Lage ist, eine Multiplikation des TORP-Signals mit einem Basisbandsignal zu realisieren, das Informationen umfasst, die durch die Vorrichtung (100) zur Funkfrequenzkommunikation ausgesandt werden sollen, und/oder mit einem Funkfrequenzsignal, das von der Vorrichtung (100) zur Funkfrequenzkommunikation empfangen werden soll.

2. Vorrichtung (100) nach Anspruch 1, bei der die wenigstens eine Multiplikatorschaltung einer ersten Multiplikatorschaltung (108) entspricht, die dazu ausgelegt ist, eine Multiplikation des TORP-Signals mit dem Basisbandsignal zu realisieren, sowie einer zweiten Multiplikatorschaltung (120), die dazu ausgelegt ist, eine Multiplikation des TORP-Signals mit dem Funkfrequenzsignal zu realisieren.

3. Vorrichtung (100) nach Anspruch 2, bei der die wenigstens eine Schaltung (106) zur Erzeugung eines TORP-Signals einer ersten Schaltung zur Erzeugung des TORP-Signals entspricht, von der ein Ausgang mit einem Eingang der ersten Multiplikatorschaltung (108) gekoppelt ist, und einer zweiten Schaltung zur Erzeugung des TORP-Signals, von der ein Ausgang mit einem Eingang der zweiten Multiplikatorschaltung (120) gekoppelt ist.

4. Vorrichtung (100) nach einem der vorhergehenden Ansprüche, ferner umfassend wenigstens zwei Schalter (130, 132), genannt erster und zweiter Schalter, die dazu ausgelegt sind, den Ausgang der oder von wenigstens einer der Schaltungen (106) zur Erzeugung des TORP-Signals mit dem Eingang der oder von wenigstens einer der Multiplikatorschaltungen (108, 120) zu koppeln, indem sie entweder direkt miteinander verbunden werden, oder unter Zwischenschaltung von Mitteln (136), die dazu ausgelegt sind, ausgehend von dem TORP-Signal ein periodisches Signal zu erzeugen, dessen Frequenzspektrum eine Hauptlinie umfasst, die einer der Linien des Spektrums des TORP-Signals entspricht, und die Rolle eines Passbandfilters spielt, das an das TORP-Signal angelegt wird und von dem Frequenzspektrum des periodischen Signals die Linien außer der Hauptlinie des periodischen Signals zurückweist.

5. Vorrichtung (100) nach Anspruch 4, bei der die Mittel, die dazu ausgelegt sind, das periodische Signal zu erzeugen, wenigstens einen injektionseingerasteten Oszillator (136) umfassen, der dazu ausgelegt ist, am Eingang das TORP-Signal zu empfangen und wenigstens periodisch mit der Frequenz eingerastet zu sein, bei der sich die Hauptlinie des periodischen Signals befindet.

6. Vorrichtung (100) nach einem der vorhergehenden Ansprüche, bei der die oder wenigstens eine der Schaltungen (106) zur Erzeugung des TORP-Signals wenigstens Folgendes umfasst:

   - einen Oszillator (126), der dazu ausgelegt ist, ein periodisches Signal mit einer Frequenz $F_{OL}$ zu erzeugen, und
   - Mittel (128, 144), die dazu ausgelegt sind, durch ein periodisches Signal der Frequenz $F_{PRP}$ gesteuert zu werden und die mit einem elektrischen Versorgungseingang des Oszillators (126) derart verbunden sind, dass sie eine Versorgungsspannung des Oszillators (126) ungleich Null nur während eines Teils jeder Periode $1/F_{PRP}$ erzeugen, oder mit einem Ausgang des Oszillators (126) derart verbunden sind, dass sie eine elektrische Verbindung zwischen dem Ausgang des Oszillators (126) und einem Ausgang der Schaltung (106) zur Erzeugung des TORP-Signals nur während eines Teils jeder Periode $1/F_{PRP}$ unterbrechen.

7. Vorrichtung (100) nach Anspruch 6, ferner umfassend wenigstens einen Schalter (142), genannt dritter Schalter, der dazu ausgelegt ist, an einem Steuereingang der Mittel (128, 144) der Schaltung (106) zur Erzeugung des TORP-Signals oder der ersten Schaltung (106) zur Erzeugung des TORP-Signals entweder, in einer ersten Konfiguration, das periodische Signal der Frequenz $F_{PRP}$ zu liefern, oder, in einer zweiten Konfiguration, das Basisbandsignal, sowie wenigstens einen Schalter (138), genannt vierter Schalter, der dazu ausgelegt ist, an einem Eingang der Multiplikatorschaltung (108) oder der ersten Multiplikatorschaltung (108) entweder, in der ersten Konfiguration, das Basisbandsignal, oder, in der zweiten Konfiguration, ein Signal mit konstanter Amplitude und entsprechend jener eines Bits vom Wert "1" zu liefern.

8. Vorrichtung (100) nach einem der Ansprüche 6 oder 7, ferner umfassend wenigstens eine Phaseneinrastschleife (124), die dazu ausgelegt ist, das periodische Signal der Frequenz $F_{PRP}$ zu liefern.

9. Verfahren zur Funkfrequenzkommunikation, umfassend wenigstens Folgendes:

   - die Erzeugung wenigstens eines TORP-Signals entsprechend Oszillationszügen, die periodisch mit einer Frequenz $F_{PRP}$ wiederholt werden, deren Oszillationen eine Frequenz $F_{OL} > F_{PRP}$ haben, und von denen jeder Oszillationszug eine Dauer von weniger als $1/F_{PRP}$ hat,
   - eine Multiplikation des TORP-Signals mit einem Basisbandsignal, das Informationen umfasst, die ausgesandt werden sollen, und/oder mit einem empfangenen Funkfrequenzsignal.

10. Verfahren nach Anspruch 9, umfassend die Durchführung einer ersten Multiplikation zwischen einem ersten TORP-Signal und dem Basisbandsignal, und/oder einer zweiten Multiplikation zwischen einem zweiten TORP-Signal und dem empfangenen Funkfrequenzsignal.

**Claims**

1. A radiofrequency communication device (100) comprising at least one TORP signal generation circuit (106), the TORP signal corresponding to oscillations trains periodically repeated at a frequency $F_{PRP}$ for which the oscillation frequency is $F_{OL} > F_{PRP}$ and for which each oscillations train lasts for a duration of less than $1/F_{PRP}$, and at least one multiplier circuit (108, 120) for which an input is coupled to an output of the TORP signal generation circuit (106) such that it is capable of multiplying the TORP signal with a baseband signal comprising information intended to be transmitted by the radiofrequency communication device (100) and/or with a radiofrequency signal intended to be received by the radiofrequency communication device (100).

2. Device (100) according to claim 1, in which said at least one multiplier circuit corresponds to a first multiplier circuit (108) capable of multiplying the TORP signal with the baseband signal and to a second multiplier circuit (120) capable of multiplying the TORP signal with the radiofrequency signal.

3. Device (100) according to claim 2, in which said at least one TORP signal generation circuit (106) corresponds to a first TORP signal generation circuit for which an output is coupled to an input of the first multiplier circuit (108) and to a second TORP signal generation circuit for which an output is coupled to an input of the second multiplier circuit (120).

4. Device (100) according to one of previous claims, also comprising at least two switches (130, 132), called first and second switches, capable of coupling the output of said at least one TORP signal generation circuit (106) with the input of at least one of the multiplier circuits (108, 120) by connecting them to each other either directly or by means (136) capable of using the TORP signal to generate a periodic signal for which the frequency spectrum comprises a principal line corresponding to one of the lines in the TORP signal spectrum and acting as a passband filter applied to the TORP signal and rejecting lines other than the main line of said periodic signal from the frequency spectrum of said periodic signal.

5. Device (100) according to claim 4, in which said means capable of generating said periodic signal comprises at least one injection locked oscillator (136) intended to receive the TORP signal as input and to be at least periodically locked to the frequency at which the principal line of said periodic signal is located.

6. Device (100) according to one of previous claims, in which the or at least one of the TORP signal generation circuits (106) comprises at least:

   - an oscillator (126) capable of generating a periodic signal with frequency $F_{OL}$, and
   - means (128, 144) that can be controlled by a periodic signal with frequency $F_{PRP}$, and that are connected to an electrical power supply input of the oscillator (126) such that they generate a non-zero power supply voltage of the oscillator (126) only during part of each period $1/F_{PRP}$, or connected to an output of the oscillator (126) such that they cut off an electrical connection between the output of oscillator (126) and an output of the TORP signal generation circuit (106) during only part of each period $1/F_{PRP}$.

7. Device (100) according to claim 6, also comprising at least one switch (142), called the third switch, capable of outputting either the periodic signal with frequency $F_{PRP}$ in a first configuration, or the baseband signal in a second configuration, onto a control input of means (128, 144) of the TORP signal generation circuit (106) or of the first TORP signal generation circuit (106), and at least one switch (138), called the fourth switch, capable of outputting either the baseband signal in the first configuration, or a constant amplitude signal corresponding to the amplitude of a bit with value « 1 » in the second configuration, onto an input of the multiplier circuit (108) or of the first multiplier circuit (108).

8. Device (100) according to one of claims 6 or 7, also comprising at least one phase locked loop (124) capable of outputting the periodic signal with frequency $F_{PRP}$.

9. A radiofrequency communication method, comprising at least:

   - the generation of at least one TORP signal corresponding to oscillations trains periodically repeated at a frequency $F_{PRP}$ of which the oscillations are at frequency $F_{OL} > F_{PRP}$ and for which each oscillations train has a duration of less than $1/F_{PRP}$,
   - multiplication of the TORP signal with a baseband signal comprising information intended to be transmitted and/or with a received radiofrequency signal.

10. Method according to claim 9, comprising the implementation of at least one of a first multiplication between a first TORP signal and the baseband signal, and/or a second multiplication between a second TORP signal and the received radiofrequency signal.

FIG.1

| Domaine temporel | Domaine fréquentiel |
|---|---|
| $g_1(t)$ $\alpha/F_{PRP}$ $f_{OL}$ | $G_1(f)$ $2 \cdot F_{PRP}/\alpha$ $f_{OL}$ |
| ✕ | ✕ |
| $h_1(t)$ $1/F_{PRP}$ | $H_1(f)$ $F_{PRP}$ |
| ‖ | ‖ |
| $torp_1(t)$ $\alpha/F_{PRP}$ $f_{OL}$ $T_{PRP}$ | $TORP_1(f)$ $2 \cdot F_{PRP}/\alpha$ $F_{PRP}$ $f_{OL}$ |

FIG.2

FIG.3

FIG.4

FIG.5

FIG.6

FIG.7

FIG.8

FIG.9

FIG.10

FIG.11

FIG.12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013079685 A1

**Littérature non-brevet citée dans la description**

- **K. OKADA et al.** A full 4-channel 6.3Gb/s 60GHz direct-conversion transceiver with low-power analog and digital baseband circuitry. *Solid-State Circuits Conférence Digest of Technical Papers (ISSCC), 2012 IEEE International,* 19 Février 2012, 218-220

- **A. SILIGARIS et al.** A 65nm CMOS fully integrated transceiver module for 60GHz wireless HD applications. *IEEE International Solid-State Circuits Conférence Digest of Technical Papers (ISSCC), 2011,* 20 Février 2011, 162-164
- **A. SILIGARIS et al.** A 60GHz UWB impulse radio transmitter with integrated antenna in CMOS 65nm SOI technology. *IEEE Silicon Monolithic Integrated Circuits in RF Systems (SiRF), 2011,* 17 Janvier 2011, 153-156